(19) Europäisches Patentamt
European Patent Office
Office européen des brevets

(11) EP 1 367 114 A1

(12) EUROPEAN PATENT APPLICATION

(43) Date of publication:
**03.12.2003 Bulletin 2003/49**

(51) Int Cl.7: **C09K 19/58**, G02F 1/1337

(21) Application number: **02008099.0**

(22) Date of filing: **11.04.2002**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Clariant International Ltd.**
**4132 Muttenz (CH)**

(72) Inventors:
- **Amakawa, Haruki**
  **Shizuoka Pref., 436-0027 (JP)**
- **Nonaka, Toshiaki**
  **Shizuoka Pref., 436-0027 (JP)**
- **Dübal, Hans-Rolf, Dr.**
  **65343 Eltville (DE)**
- **Wingen, Rainer, Dr.**
  **65795 Hattersheim (DE)**

(74) Representative: **Isenbruck, Günter, Dr. et al**
**Patentanwälte,**
**Isenbruck - Bösl - Hörschler - Wichmann - Huhn,**
**Theodor-Heuss-Anlage 12**
**68165 Mannheim (DE)**

# (54) Active matrix liquid crystal device and smectic liquid crystal mixture

(57) A smectic liquid crystal mixture comprising a smectic liquid crystal base mixture and at least one dopant, which is either a complex ligand or an organic material, in a concentration of 0.01 to 5.0 weight percent.

EP 1 367 114 A1

## Description

The present invention relates to a novel smectic liquid crystal mixture and a novel active matrix liquid crystal device or display. More particularly, it relates to chiral smectic or more specifically ferroelectric liquid crystal mixtures, which enables the generation of gray levels and full color representation useful for computer monitors, TV, DVD, Video and other displays. In particular these displays are useful for high speed applications and for yielding a strong colour saturation by improved backlight techniques which rely upon a high speed liquid crystal. A further aspect of this invention are active matrix displays containing such a mixture, particularly in a monostable geometry.

Monostable chiral smectic liquid crystals have been proposed to be combined with active matrix technology to simultaneously allow the utilization of a very high 'pixel speed' and show a gray scale, contrary to bistable SSFLC displays.

Takatoh et. al. ($6^{th}$ International Conference on Ferroelectric Liquid Crystals, 1997, 20-24 July, Brest, France; M. Takatoh et al. 1998, SID Digest, 1171-1174. ) have demonstrated an AM display based upon chiral smectics using a very high $P_s$ material driven with an active matrix with polycrystalline Silicon -TFT. Nito et.al. (Nito et al., 1993, Journal of the SID, 1/2, 163-169.) have suggested a monostable AM-FLC with much lower $P_s$, however, with the disadvantage of a stripey FLC texture which is not suitable for high contrast displays without further improvements. Furue et. al. (Furue, H. et al., 1998, IDW '98, 209 - 212) suggested a polymer stabilized SSFLCD with a FELIX® mixture with a material having a moderate $P_s$ value.

Asao et. al. have presented a monostable FLC mode (Y. Asao et al., ILCC 2000, Sendai, and Jpn. J. Appl. Phys. 38, L534-L536, 1999 therein called "half-V-shape FLC" mode; see also T. Nonaka et.al., Liquid Crystals 26(11), 1599-1602, 1999, therein called "CDR" mode). Such displays provide, by virtue of their smaller Ps values, solutions for the gray scale problem and the resolution limitation caused by too large $P_s$ values in active matrix panels.

A remaining problem in the application of TFT-FLCD (e.g. monostable FLC) is the limited so-called "image sticking" effect (H. Pauwels et.al., Proceedings of the IDRC, Florida 2000, pp.72-75), caused by the activity of the manifold of charge carriers that are present in the pixel volume and which tend to generate a hysteresis effect, i.e. the type of gray level becomes dependent on the pixel switching history and the correct addressing of gray levels becomes therefore hardly reproducible in practice.

Thus it is seemingly an important factor to maintain a very low ion content and to achieve chemical stability against heat and light, both of which could cause additional ion formation. This demand has in practice lead to the exclusion of any material containing hetero atoms such as N, S, even O in liquid crystal mixtures for active matrix (i. e. TFT or MIM) applications {cp. e.g. Petrov et al., Liq.Cryst. 19(6), 729 (1995) [CAN 124:101494]; Petrov, Proc. SPIE-Int.Soc.Opt.Eng.(1995), 2408 [CAN 123:241500]; Dabrowski, Biul.Wojsk.Akad.Techn. 48(4), 5 (1999) [CAN 131: 163227]; Kirsch, Angew.Chem., Int.Ed.39(23),4216 (2000) and references cited in these papers}.Whereas, so far, this could successfully be done for nematics (cp. e.g. DE-A 1 962 9812, p.12 to 16), there is hardly any smectic ($S_c$) material without such hetero atoms. Thus the use of fast switching smectics for TFT application is strongly limited if not prohibited if the condition to exclude heteroatoms would be mandatory.

The objective of the present invention was therefore to provide a smectic liquid crystal mixture and an active matrix liquid crystal display with very high reproducibility of the gray levels irrespective of the containment of hetero atoms, in particular ferroelectric or antiferroelectric liquid crystal mixtures.

Contrary to the above-mentioned approach to keep liquid crystal materials free of ionic decontaminations, we have surprisingly found that certain dopants as additives to smectic liquid crystal mixtures are indeed effective in removing the image sticking in active matrix displays, while keeping a sufficiently high holding ratio. This is insofar unexpected, as the dopants, e.g. polyethylene glycoles, crown ethers, azacrown ethers and the like usually contain several oxygen and/or nitrogen atoms and increase the conductivity of the material. Thus, in the traditional view, these dopants should cause a strong image sticking and a low holding ratio. Surprisingly, the opposite is observed.

Thus, the present invention provides a smectic liquid crystal mixture comprising a smectic liquid crystal base mixture and at least one dopant, which is either a complex ligand or an organic material in a concentration of 0.01 to 5.0 weight percent. The electrical conductivity of the instant liquid crystal mixtures is increased by at least 20 percent with respect to the base mixture

In a preferred embodiment of the instant invention the dopant is present in a concentration of 0.05 to 1.0 weight percent, which leads to a suppression or minimization of the image sticking effect up to 10 % of the untreated value.

The liquid crystal mixture according to the invention can be used in active liquid crystal displays.

In particular the present invention relates to a ferroelectric or antiferroelectric liquid crystal mixture, most particularly a monostable ferroelectric liquid crystal mixture, especially a monostable ferroelectric liquid crystal mixture having a phase sequence with decreasing temperature

isotropic - tilted smectic

or

isotropic - nematic or cholesteric - tilted smectic

or
isotropic - nematic or cholesteric - smectic A - tilted smectic,
comprising one or several dopants.

For dopants according to invention with -OH or $-NH_2-$ or -NH- or -SH groups, for instance those described in EP-B-385 688, US-A- 5,122, 296 and US-A- 6 ,139, 925, which are hereby incorporated by reference.

The complex ligands according to the invention are either podands, coronands or cryptands. Pertinent terminology and listing of pertinent compounds is hereby incorporated by reference to EP-B- 385 688, EP-B- 502 964 and EP-B- 599 928.

The complex ligands can also be α-cyclodextrin [10016-20-3] , β-cyclodextrin [7585-39-9] or γ-cyclodextrin [17465-86-0].

A preferred group of podands encompasses oligoethylendialkylether and polyethylenglycols, respectively, each preferably with a molar mass above 350 amu, both sub-groups optionally substituted by pendant groups.

A preferred group of coronands encompasses crown ethers (i.e. medio- and macro-cycles with oxygen donors), aza crown (i.e. medio- and macro-cycles with nitrogen and oxygen donors), each sub-group optionally substituted by pendant groups. Especially preferred are coronands with one or two nitrogen donors, these nitrogen atoms being substituted by -C(=O)-R groups wherein R is an alkyl group (linear or branched) or a cyclic moiety; with this respect reference is made to EP-B-599 928 which is hereby incorporated by reference.

A prefered group of cryptands encompasses bicyclic species with nitrogen and oxygen donors (e.g. kryptofix®) , bicyclic species exclusively with oxygen donors , and tricyclic species (e.g. soccerball cryptand) with either nitrogen and oxygen donors or exclusively oxygen donors; all sub-groups can be substituted by pendant groups.

In either group of preferred complex ligands their properties can be adjusted to the additional parameters of the display by modifying the pattern of the podand, coronand and cryptand, resp., through incorporation of hetero atoms (other than nitrogen and oxygen, e.g. sulfur or silicium) as donors, through incorporation of cyclic donor moieties (e.g. pyridine or quinoline end groups in case of podands; e.g. phenylen-diyl in case of benzo crowns) and through attaching pendant groups, respectively. Combinations of these different types of modifications are also possible.

In particular the sum of the concentrations (in weight percent = wt%) of the dopant is below 10 wt%, preferably below 5 wt%, especially below 3 wt%.
Preferably, the average molar mass of the dopants (or in case of one dopant the molar mass) is between 100 and 2000 amu, especially between 200 and 1000 amu, in particular between 200 and 600 amu.
For aza coronands, e.g. as disclosed in EP-B 599928, a preferred range is between 300 and 700 amu.

A further object of the invention is to provide a smectic liquid crystal display device, operated in an active matrix panel comprising the above described mixtures.

A further object of the invention is to provide a ferroelectric liquid crystal display device operated in an active matrix panel using the above described mixtures. With preference this display is a monostable ferroelectric display, such as half-V-shape, CDR or short pitch FLC displays.
A further object of the invention is to provide an antiferroelectric liquid crystal display device operated in an active matrix panel using the above described mixtures. With preference this display is a monostable antiferroelectric display, such as the so-called "V-shape" mode.

A further object of the invention is the use of the above described smectic mixtures operated in an active matrix panel, especially if the liquid crystal is a chiral smectic, particularly a monostable chiral smectic mode.

The liquid crystal mixtures according to the invention are prepared in a manner which is customary per se. As a rule the components are dissolved in one another, advantageously at elevated temperatures.

The liquid crystal mixtures according to the invention generally comprises at least two (2), preferably at least five (5), particularly at least eight (8) compounds.

As an alternative to add the dopants into the liquid crystal mixture, they can be mixed into or added onto the alignment layer, so that the dopants are effectively in contact with the smectic liquid crystal.

Optional additional constituents of the mixtures according to invention are materials that increase the light stability [UV stabilizers, e.g. of the "benzophenone" type, "benzotriazole" type or HALS (hindered amine light stabilizer) type]. Preferably the mixtures may contain 0.01 wt.-% to 10 wt.-% of one or several UV stabilizers; especially preferred are mixtures containing 0.1 wt.-% to 5 wt.-% of one or several UV stabilizers.
Of the HALS type several species have been disclosed for a variety of applications, e.g. in US 4,038,280 or Sedlar, Polym.Photochem. (1982), 2(3), 175 [CAN 97: 24546].
There are several kinds of commercially available HALS compounds (e.g. provided by Clariant and Ciba Specialty Chemicals) , mainly used for modifying UV stability for plastics and paints. These compounds are not specially designed for smectic liquid cystal materials, so that their use may induce decrease of phase transition temperatures of the liquid crystal or cause miscibility problems, all depending on the structures of the liquid crystal compounds and HALS compounds, resp..
More specifically, HALS compounds for use in liquid crystal mixtures have been disclosed in WO 02/18515 which is

hereby incorporated by reference.

A preferred group of HALS compounds encompasses the formulae (Ia) to (Id) and (II)

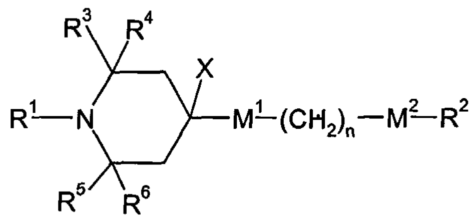

(Ia)

wherein

n is an integer from 1 to 20

X is H

$R^1$ is H or alkyl of 1 to 4 C atoms

$R^3$, $R^4$, $R^5$, $R^6$ are $CH_3$

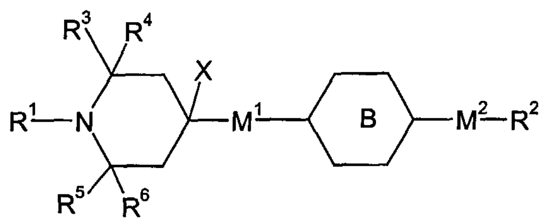

(Ib)

wherein

X is H

$R^1$ is H or alkyl of 1 to 4 C atoms

$R^3$, $R^4$, $R^5$, $R^6$ are $CH_3$

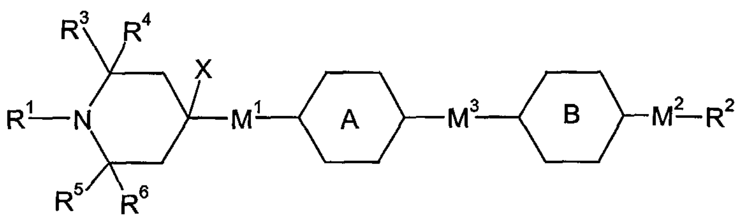

(Ic)

wherein

X is H

$R^1$ is H or alkyl of 1 to 4 C atoms

$R^3$, $R^4$, $R^5$, $R^6$ are $CH_3$

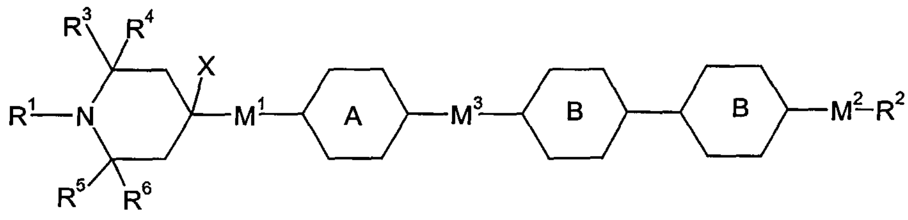

(Id)

wherein
X is H
$R^1$ is H or alkyl of 1 to 4 C atoms
$R^3$, $R^4$, $R^5$, $R^6$ are $CH_3$

In either case
$R^2$ is H , F , a linear or branched alkyl group of 1 to 20 C atoms or linear or branched alkenyl group of 2 to 20 C atoms, wherein in either case one or two -$CH_2$-groups can be replaced by -O-, -C(=O)O-, -Si$(CH_3)_2$-, it also being possible to replace one or more H of the alkyl or alkenyl group by F or $CH_3$
or a radical

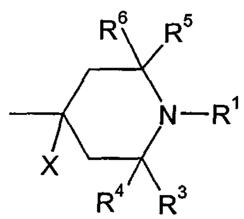

$R^3$, $R^4$, $R^5$, $R^6$: represent independently from another an alkyl group of 1 to 8 C atoms
$M^1$, $M^2$ are independently from another for a single bond, -OC(=O), -C(=O)O-, -$OCH_2$-, or -NH-
$M^3$ is a single bond, -OC(=O)-, -C(=O)O-, -$OCH_2$-, -$CH_2O$-, -C≡C-, -$CH_2CH_2$-, -$CH_2CH_2CH_2CH_2$

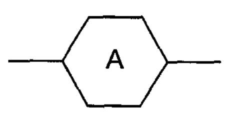 and 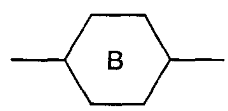

are independently from another phenylen-1,4-diyl, which optionally can be substitued by one, two or three F, or cyclohexan-1,4-diyl, which can optionally be substituted by one CN, $CH_3$ or F, or pyrimidin-2,5-diyl, optionally substituted by one F, pyridine-2,5-diyl, which can optionally be substituted by one F, or naphthalene-2,6-diyl, which can optionally be substituted by one, two or three F, or 1,2,3,4-tetrahydronaphthalene-2,6-diyl (the aromatic ring optionally substituted by one, two or three F), or decahydronaphthalene-2,6-diyl, or indane-2,5(6)-diyl, or fluorene-2,-7-diyl, or phenanthrene-2,7-diyl, or 9,10-dihydrophenanthrene-2,7-diyl, or (1,3,4)thiadiazol-2,5-diyl, or (1,3)thiazol -2,5-diyl, or (1,3)thiazol-2,4-diyl, or thiophen-2,4-diyl, or thiophen-2,5-diyl, or (1,3)dioxan-2,5-diyl, or piperidin-1,4-diyl, or piperazin-1,4-diyl

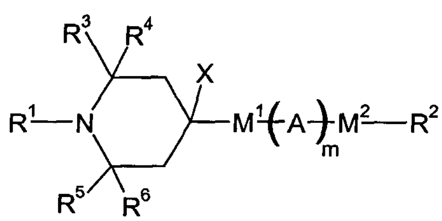

(II)

wherein

$R^1$ is H or a linear or branched alkyl group of 1 to 20 C atoms or linear or branched alkenyl group of 2 to 20 C atoms, wherein in either case one $-CH_2-$ group can be replaced by cyclohexylen-1,4-diyl, or one or two $-CH_2-$ groups can be replaced by-O-, if non-adjacent to N, or by -C(=O)- or $-Si(CH_3)_2-$, and one or more H of the alkyl or alkenyl group optionally being replaced by F or $CH_3$.

$R^2$ is

a) H or F

b) a linear or branched alkyl group of 1 to 20 C atoms or linear or branched alkenyl group of 2 to 20 C atoms, wherein in either case one or two $-CH_2-$ groups can be replaced by -O-, -C(=O)O-, $-Si(CH_3)_2-$, it also being possible to replace one or more H of the alkyl or alkenyl group by F or $CH_3$.

c) a radical

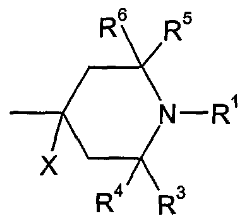

wherein independently from the respective meanings in (I)

$R^3$, $R^4$, $R^5$, $R^6$: represent independently from another an alkyl group of 1 to 8 C atoms

$M^1$, $M^2$ are independently from another for a single bond, -OC(=O), -C(=O)O-, $-OCH_2-$, or -NH-

A is the group -C(=Y)- wherein Y is CH-Z with Z being phenylen-1,4-diyl, optionally substituted by 1 to 3 halogen atoms, alkyl or alkyloxy groups of 1 to 4 C atoms, with the proviso that $M^1$ and $M^2$ are -C(=O)O- and -OC(=O)-, respectively;

X is H, OH, or a linear or branched alkyl or alkyloxy group of 1 to 20 C atoms, wherein one or two $-CH_2-$ groups can be replaced by -O-, -C(=O)O-, $-Si(CH_3)_2-$, it also being possible to replace one or more H by F or $CH_3$

m: is 0 or 1

By matching of LC composition, type of complex ligand and type of light stabilizer mixtures can be achieved that withstand light- induced stress while the mixture and display performance (e.g. minimal hysteresis in monostable FLCDs, high contrast, stable high-quality alignment, high voltage-holding-ratio, addressability) remain in a technically required range.

With this respect favorable combinations can be derived from

LC mixtures e.g. as disclosed in WO99/6453 WO00/36054 or DE 19934799

and

coronands as disclosed in EP 385688, EP 502964 and EP 599928

and

2,2,6,6-tetramethyl-piperidine-4-yl compounds as disclosed in WO 02/18515

Preferred compositions comprise

LC mixtures e.g. as disclosed in WO99/64538, WO00/36054 or DE 19934799

and

aza coronands as disclosed in EP 599928

and

2,2,6,6-tetramethyl-piperidine-4-yl compounds as disclosed in WO 02/18515

Optional additional constituents of the mixtures according to invention are materials that increase the stability against oxidative degradation (antioxidants, e.g. of the "sterically hindered phenol" type). Preferably the mixtures may contain 0.01 wt.-% to 10 wt.-% of one or several antioxidants; especially preferred are mixtures containing 0.1 wt.-% to 5 wt.-% of one or several antioxidants.

Optionally the mixtures according to invention may contain a combination of UV stabilizers and antioxidants.

Chiral smectic liquid crystal mixtures according to the invention are particularly suitable for use in electro-optical switching and display devices (displays). These displays are usually constructed in such a way that a liquid crystal layer is enclosed on both sides by layers which are usually, in this sequence starting from the LC layer, at least one alignment layer, electrodes and a limiting sheet (for example of glass). In addition, they can contain spacers, adhesive frames, polarizers and, for color displays, thin color-filter layers or are operated in the sequential backlight technique. Other possible components are antireflection, passivation, compensation and barrier layers and, for active-matrix displays, electric non-linear elements, such as thin-film transistors (TFTs) and metal-insulator-metal (MIM) elements. The structure of liquid crystal displays has already been described in detail in relevant monographs (see, for example, T. Tsukuda, "TFT/LCD Liquid crystal displays addressed by thin film transistors", Japanese Technology Reviews, 1996 Gordon and Breach, ISBN 2-919875-01-91.

An active matrix liquid crystal display within the scope of this invention can also be an optical element that acts as a light valve or a device used to change the polarization state of light by means of a field-induced re-orientation of the smectic liquid crystal molecules, in particular an FLCOS (ferroelectric liquid crystal on silicon), an optical shutter and the like.

In a preferred embodiment the FLC display is operated in the monostable mode with active matrix panel.

Several documents are cited in this application, e.g. to discuss the state of the art, synthesis of compounds used in the present invention or application of the mixtures according to the invention. All these documents are hereby incorporated by reference.

Example1: cell construction and hysteresis measurement

A solution of LQT 120 (Hitachi Kasei) is applied onto glass substrates with ITO by spin coating at 2500 rpm. The electrode area was 0.9 $cm^2$. The substrates are heated at 200°C for 1 hour to form a film. After rubbing the coated film with a nylon cloth in one direction, the substrates are assembled into a cell with spacers having a thickness of 1.5 µm inserted between the substrates in such a manner that the rubbing directions are anti-parallel to each other.

A chiral smectic liquid crystal mixture (called M1 hereafter) with the phase sequence:

I 100 N* 61 SmC*

is filled into the cell in the isotropic phase, cooling progressively through the nematic-(or cholesteric-) and the smectic C* -phase. A small bias dc voltage of 3 V is applied during the nematic - smectic C* phase transition to yield a uniform monostable texture.

The cell is now installed in a polarising microscope, equipped with a photodiode to measure the optical transmission between crossed polarisers. The cell is aligned such, that with no voltage applied it appears dark due to the optical axis being arranged parallel to one of the polarisers. By applying 5 Volts the cell is switched into a bright state having a maximum in transmittance.

The cell is then addressed by voltage pulses to test the reproducibility of addressing gray levels. The following behaviour is observed:

| Voltage | Transmittance | Voltage history |
|---|---|---|
| 2.3V | 32.8% | increasing from 0V-2.3V (dark to grey) |
| 2.3V | 40.8% | decreasing from 5V-2.3V (bright to grey) |

Ideally in both cases, the grey level transmittances should reach the same level. The result however show an unwanted very pronounced memory of the previous state, i.e. the switching from dark to grey leads to a different grey level compared to bright to grey (image sticking). This hysteresis effect is time-dependent. The relaxation time to a constant value should be as short as possible, the remaining hysteresis after relaxation should be as small as possible. These parameters are subject to improvement.

We define the hysteresis effect by the difference DT:

DT = Transmittance (bright to grey) - Transmittance (dark to grey)
or, in this case:
DT = Transmittance (5 V to 2.3 V) - Transmittance (0 V to 2.3 V)

DT(t) is time dependent. The results of the time-dependent observation (remaining hysteresis DT(∞) and relaxation time τ(R)) are compiled in table 1.

Example 2: Effect of adding a dopant

In the same manner, another cell is prepared and filled with a modified mixture (called M2 hereafter) being composed of 99.8w% M1 and 0.2 w% D1, with the dopant D1 being the compound 1,4,10,13-Tetraoxa-7,16-diaza-7,16-dipentanoyl-cyclooctadecane [190844-17-8].

The cell is then addressed with the same 2.3V voltage pulses as in example 1 to determine the time-dependent hysteresis effect.
The results of DT(t) are also included in table 1.

Table 1:

| Comparison of the hysteresis effect of M1 and M2 | | |
|---|---|---|
| Time (in sec) | DT in % for mixture M1 | DT in % for mixture M2 |
| 0 | 8.0 | 10.8 |
| 15 | 4.0 | 6.0 |
| 30 | 2.6 | 2.0 |
| 60 | 2.0 | 1.1 |
| 120 | 1.4 | 0.4 |
| 180 | 1.2 | 0.3 |
| 360 | 1.0 | 0.3 |
| Mixture M1: DT(∞) = 1.0% τ(R) = 120 sec<br>Mixture M2: DT(∞) = 0.3% τ(R) = 120 sec | | |

As can be seen mixture M2 exhibits improved hysteresis DT(∞) compared to mixture M1.

Example 3

To check the effect of dopants in the combination with stabilisers, a third mixture (called M3 hereafter) is prepared being composed of 99.8 w% M1 and 0.2 w% of stabilizer #3369 [2,2,6,6-Tetramethyl-piperidine-4-yl (4-hexyl) benzoate] (Clariant GmbH). A further mixture (called M4 hereafter) is prepared being composed of 99.6 w% M1and 0.2 w% D1 and 0.2 w% #3369.

The time-dependent hysteresis of both mixtures are tested in the same manner (2.3V pulse addressing) as in examples 1 and 2.
Table 2 shows the time-dependent hysteresis effect.

Table 2:

| Comparison of the hysteresis effect of M3 and M4 | | |
|---|---|---|
| Time (in seconds) | DT in % for Mixture M3 | DT in % for Mixture M4 |
| 0 | 14.4 | 14.8 |
| 15 | 10.0 | 6.0 |
| 30 | 6.8 | 3.2 |
| 60 | 5.3 | 2.4 |
| 120 | 5.0 | 2.2 |
| Mixture M3: DT(∞) = 5.0% τ(R) = 60 sec<br>Mixture M4: DT(∞) = 2.2% τ(R) = 60 sec | | |

As can be seen, mixture M4 exhibits improved hysteresis DT(∞) compared to mixture M3.

Mixture M2: τ(R) = 120 sec

Mixture M4: τ(R) = 60 sec

As can be seen, mixture M4 exhibits improved relaxation time compared to mixture M2.

Example 4: conductivity measurements

The conductivities of the mixtures M1 - M4 are measured by means of a MTR-1 device (Toya Technica). The current-voltage curves are typically unsymmetric, therefore two values are given:

switch ON state = from low to high voltages
switch OFF state = from high to low voltages

Table 3

| summarises the results: | | | | |
|---|---|---|---|---|
| Mixture | Conductivity in the switch ON state (1/TeraOhm*cm) | Change (%) | Conductivity in the switch OFF state (1/TeraOhm*cm) | Change (%) |
| M1 | 0.014 | 0 | 0.0033 | 0 |
| M2 | 0.037 | +164 | 0.023 | +596 |
| M3 | 0.016 | +14 | 0.0053 | +60 |
| M4 | 0.333 | +2278 | 0.333 | +9900 |
| (10Vpp, triangular wave, 0.1 Hz) | | | | |

Mixtures M2 and M4 have much higher conductivity than M1 and M3.
Mixtures M2 and M4 show improved hysteresis effect (tables 1 and 2) compared to M1 and M3.
This is unexpected, because in the traditional view ionic impurities in LC material, contaminants from alignment layer material and/or glue which increase the conductivity should cause a strong image sticking.

Example 5: cell construction with another alignment layer material and hysteresis measurement

A solution of SE-7992 (Nissan Chemical Industries) is applied instead of LQT-120 in example 1.
M1 is filled into the cell in the isotropic phase and treated to yield a uniform monostable texture in the same manner as in example 1.
The experiment on the hysteresis effect is also the same as in example 1; the results of DT(t) are included in table 4.

Example 6:

M2 is tested in the same manner as in example 5. The results of DT(t) are also included in table 4.

Table 4:

| Comparison of the hysteresis effect of M1 and M2 in SE7992 cell | | |
|---|---|---|
| Time (in second) | DT in % for Mixture M1 | DT in % for Mixture M2 |
| 0 | 6.0 | 4.2 |
| 10 | 3.0 | 2.0 |
| 20 | 1.7 | 1.0 |
| 30 | 1.3 | 0.8 |
| 60 | 1.4 | 0.6 |
| | | |
| Mixture M1: DT(∞) = 1.4% τ(R) = 20 sec<br>Mixture M2: DT(∞) = 0.6% τ(R) = 20 sec | | |

As can be seen mixture M2 exhibits improved hysteresis DT(∞) compared to mixture M1.

Example 7:

M3 is tested in the same manner as in example 5. The results of DT(t) are included in table 5.

Example 8:

M4 is tested in the same manner as in example 5. The results of DT(t) are also included in table 5.

Table 5:

| Comparison of the hysteresis effect of M3 and M4 in SE7992 cell | | |
|---|---|---|
| Time (in seconds) | DT in % for Mixture M3 | DT in % for Mixture M4 |
| 0 | 11.4 | 4.8 |
| 10 | 8.7 | 1.2 |
| 20 | 8.4 | 1.1 |
| 30 | 8.6 | 0.9 |
| 60 | 8.1 | 1.0 |
| | | |
| Mixture M3: DT(∞) = 8.1% τ(R) = 10 sec<br>Mixture M4: DT(∞) = 1.0% τ(R) = 10 sec | | |

As can be seen, mixture M4 exhibits improved hysteresis DT(∞) compared to mixture M3.

Mixture M2: τ(R) = 20 sec

Mixture M4: τ(R) = 10 sec

As can be seen, mixture M4 exhibits improved relaxation time compared to mixture M2.

Example 9: conductivity measurements

The conductivities of the mixtures M1 - M4 in SE7992 cell are measured by means of a MTR-1 device (Toya Technica) in the same manner in example 4.

Table 6

| summarises the results in SE7992 cell: | | | | |
|---|---|---|---|---|
| Mixture | Conductivity in the switch ON state (1/TeraOhm*cm) | Change (%) | Conductivity in the switch OFF state (1/TeraOhm*cm) | Change (%) |
| M1 | 0.020 | 0 | 0.0058 | >0.01 |
| M2 | 0.061 | +205 | 0.056 | +865 |
| M3 | 0.071 | +250 | 0.063 | +986 |
| M4 | 0.80 | +3900 | 0.78 | +8176 |
| (10Vpp, triangular wave, 0.1Hz) | | | | |

Mixtures M2 and M4 have higher conductivity than M1 and M3.
Mixtures M2 and M4 show improved hysteresis effect (tables 4 and 5) compared to M1 and M3.

Example 10:

D2 {7,16-bis(tricyclo[3.3.1.13,7]dec-1-ylcarbonyl)-1,4,10,13-tetraoxa-7,16-diazacyclooctadecane [148515-35-9]} is mixed into the mixture M3 instead of D1 in the same manner as in example 8. The result of DT(t) is included in table 7.

Example 11:

D3 {16-(tricyclo[3.3.1.13,7]dec-1-ylcarbonyl)-1,4,7,10,13-pentaoxa-16-azacyclooctadecane} is mixed into the M3 instead of D1 in the same manner as in example 8. The result of DT(t) is included in table 7.

Table 7:

| Hysteresis and relaxation (Dt in %) in SE7992 cell | | | |
|---|---|---|---|
| Time (in seconds) | DT in % for Mixture M3 | DT in % for Example 10 | DT in % for Example 11 |
| 0 | 11.4 | 6.7 | 8.4 |
| 10 | 8.7 | 2.6 | 3.3 |
| 20 | 8.4 | 2.4 | 3.2 |
| 30 | 8.6 | 2.1 | 3.5 |
| 60 | 8.1 | 2.3 | 3.0 |
| Mixture M3: DT(∞) = 8.1% τ(R) = 10 sec<br>Example10: DT(∞) = 2.3% τ(R) = 10 sec<br>Example11: DT(∞) = 3.0% τ(R) = 10 sec | | | |

As can be seen, example 10 and example 11 exhibit improved hysteresis DT(∞) compared to mixture M3.

## Claims

1. A smectic liquid crystal mixture comprising a smectic liquid crystal base mixture and at least one dopant, which is either a complex ligand or an organic material, in a concentration of 0.01 to 5.0 weight percent.

2. A smectic liquid crystal mixture according to claim 1, wherein the dopant has at least one -OH or $-NH_2$ or -NH- or -SH or -NR- or OR or SR group.

3. A smectic liquid crystal mixture according to claim 1 and/or 2 having the phase sequence
isotropic - nematic or cholesteric - tilted smectic.

4. A smectic liquid crystal mixture according to at least one of the preceding claims, wherein the complex ligands are podants, coronands or cryptands.

5. A smectic liquid crystal mixture according to at least one of the preceding claims, wherein the sum of the concentration of the dopants is below 10 weight percent.

6. A smectic liquid crystal mixture according to at least one of the preceding claims, wherein the average molar mass of the dopants is between 100 and 2000 amu.

7. A smectic liquid crystal mixture according to at least one of the preceding claims, wherein the smectic liquid crystal mixture further comprises a light stabilizer.

8. A smectic liquid crystal mixture according to claim 7 wherein the light stabilizer is a HALS compound comprising a 2,2,6,6-tetramethyl-piperidine-4-yl moiety.

9. A smectic liquid crystal mixture according to claim 8 wherein the mixture comprises at least one compound of formulae (Ia), (Ib), (Ic), (Id) or (II) and at least one complex ligand of the coronand or cryptand type

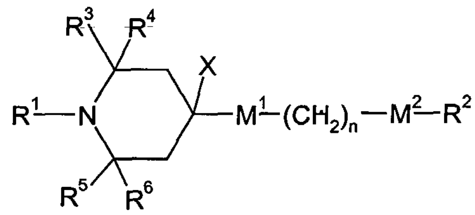

(Ia)

wherein
n is an integer from 1 to 20
X is H
$R^1$ is H or alkyl of 1 to 4 C atoms
$R^3$, $R^4$, $R^5$, $R^6$ are $CH_3$

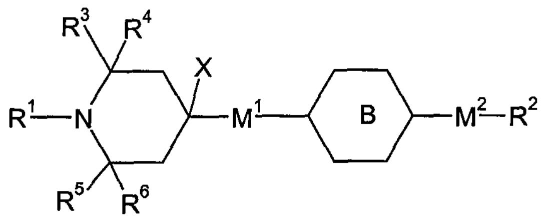

(Ib)

wherein
X is H
$R^1$ is H or alkyl of 1 to 4 C atoms
$R^3$, $R^4$, $R^5$, $R^6$ are $CH_3$

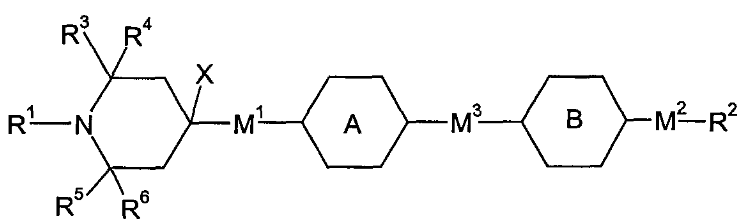

(Ic)

wherein
X is H
$R^1$ is H or alkyl of 1 to 4 C atoms
$R^3$, $R^4$, $R^5$, $R^6$ are $CH_3$

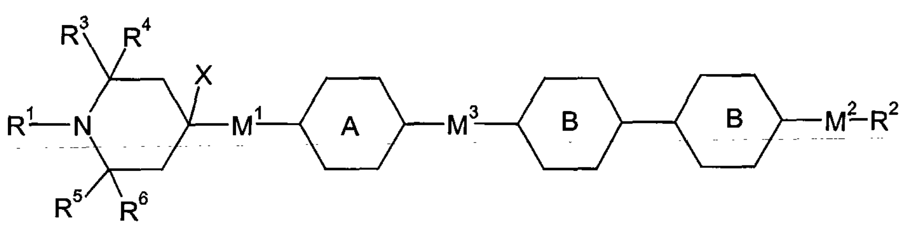

(Id)

wherein
X is H
$R^1$ is H or alkyl of 1 to 4 C atoms
$R^3$, $R^4$, $R^5$, $R^6$ are $CH_3$
In either case
$R^2$ is H , F , a linear or branched alkyl group of 1 to 20 C atoms or linear or branched alkenyl group of 2 to 20 C atoms, wherein in either case one or two -CH groups can be replaced by -O-, -C(=O)O-, $-Si(CH_3)_2-$, it also being possible to replace one or more H of the alkyl or alkenyl group by F or $CH_3$ or a radical

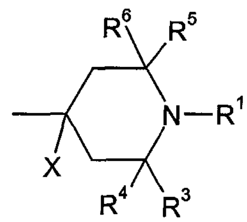

$R^3$, $R^4$, $R^5$, $R^6$: represent independently from another an alkyl group of 1 to 8 C atoms
$M^1$, $M^2$ are independently from another for a single bond, -OC(=O), -C(=O)O-, $-OCH_2-$, or -NH-
$M^3$ is a single bond, -OC(=O)-, -C(=O)O-, $-OCH_2-$, $-CH_2O-$, -C≡C-, $-CH_2CH_2-$, $-CH_2CH_2CH_2CH_2$

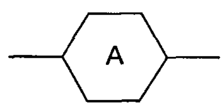 and 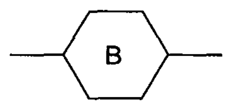

are independently from another phenylen-1,4-diyl, which optionally can be substitued by one, two or three F, or cyclohexan-1,4-diyl, which can optionally be substituted by one CN, $CH_3$ or F, or for pyrimidin-2,5-diyl, optionally substituted by one F, pyridine-2,5-diyl, which can optionally be substituted by one F, or naphthalene-2,6-diyl, which can optionally be substituted by one, two or three F, or 1,2,3,4-tetrahydronaphthalene-2,6-diyl (the aromatic ring optionally substituted by one, two or three F), or decahydronaphthalene-2,6-diyl, or indane-2,5(6)-diyl, or fluorene-2,-7-diyl, or phenanthrene-2,7-diyl, or 9,10-dihydrophenanthrene-2,7-diyl, or (1,3,4)thiadiazol-2,5-diyl, or (1,3)thiazol -2,5-diyl, or (1,3)thiazol-2,4-diyl, or thiophen-2,4-diyl, or thiophen-2,5-diyl, or (1,3)dioxan-2,5-diyl, or piperidin-1,4-diyl, or piperazin-1,4-diyl

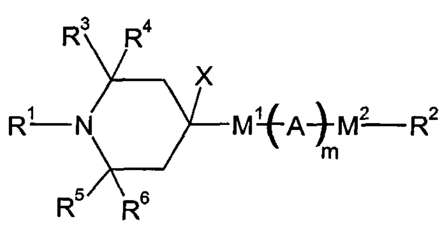

(II)

wherein
$R^1$ is H or a linear or branched alkyl group of 1 to 20 C atoms or linear or branched alkenyl group of 2 to 20 C atoms, wherein in either case one $-CH_2-$ group can be replaced by cyclohexylen-1,4-diyl, or one or two $-CH_2-$ groups can be replaced by -O-, if non-adjacent to N, or by -C(=O)- or $-Si(CH_3)_2-$, and one or more H of the alkyl or alkenyl group optionally being replaced by F or $CH_3$.
$R^2$ is

a) H or F
b) a linear or branched alkyl group of 1 to 20 C atoms or linear or branched alkenyl group of 2 to 20 C atoms, wherein in either case one or two $-CH_2-$ groups can be replaced by -O-, -C(=O)O-, $-Si(CH_3)_2-$, it also being

possible to replace one or more H of the alkyl or alkenyl group by F or $CH_3$.
c) a radical

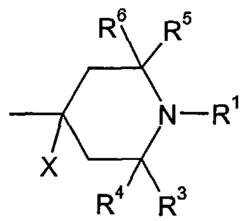

wherein independently from the respective meanings in (I)
$R^3$, $R^4$, $R^5$, $R^6$: represent independently from another an alkyl group of 1 to 8 C atoms
$M^1$, $M^2$ are independently from another for a single bond, -OC(=O), -C(=O)O-, $-OCH_2-$, or -NH-
A is the group -C(=Y)- wherein Y is CH-Z with Z being phenylen-1,4-diyl, optionally substituted by 1 to 3 halogen atoms, alkyl or alkyloxy groups of 1 to 4 C atoms, with the proviso that $M^1$ and $M^2$ are -C(=O)O- and -OC(=O)-, respectively;
X is H, OH, or a linear or branched alkyl or alkyloxy group of 1 to 20 C atoms, wherein one or two $-CH_2-$ groups can be replaced by -O-, -C(=O)O-, $-Si(CH_3)_2-$, it also being possible to replace one or more H by F or $CH_3$
m: is 0 or 1

**10.** A smectic liquid crystal mixture according to at least one of the preceding claims, wherein the mixture comprises a smectic liquid crystal base mixture and at least one dopant, wherein the electrical conductivity is increased by at least 20 percent with respect to the base mixture.

**11.** A smectic liquid crystal mixture according to at least one of the preceding claims, wherein the concentration of the dopant is from 0.05 to 1.0 weight percent, which surpresses or minimizes the image sticking effect up to 10% of the untreated value.

**12.** Active matrix liquid crystal device, comprising a smectic liquid crystal mixture according to at least one of the claims 1 to 9.

**13.** Active matrix liquid crystal display according to claim 10, wherein the dopants are mixed into or added onto the alignment layer.

**14.** Active matrix liquid crystal device according to claims 10 and/or 11, comprising the smectic liquid crystal mixture in monostable orientation.

**15.** Active matrix liquid crystal device according to at least one of the preceding claims, wherein the projection of the smectic layer normal onto the electrode surface is not parallel to the rubbing direction.

**16.** Active matrix liquid crystal device according to at least one of the preceding claims, wherein the liquid crystal layer is enclosed on both sides by at least one alignment layer, electrodes and a limiting sheet.

**17.** Monostable active matrix display, comprising a tilted smectic liquid crystal mixture exhibiting a conductivity larger than $10^{-14}$ $(Ohm \cdot cm)^{-1}$ , measured under the conditions triangle waveform and 0.1 Hz frequency and 10 V voltage (peak to peak).

European Patent Office

# EUROPEAN SEARCH REPORT

Application Number
EP 02 00 8099

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 702 639 A (ESCHER ET AL) 30 December 1997 (1997-12-30) * column 4, line 4 - line 8 * * column 5, line 26 - column 51, line 30 * * claims * | 1-6, 10-17 | C09K19/58 G02F1/1337 |
| D,A | & EP 0 502 964 A (HOECHST AG) 16 September 1992 (1992-09-16) | | |
| D,A | DE 199 34 799 A (CLARIANT GMBH) 1 February 2001 (2001-02-01) * claims * | 1,10-17 | |
| D,A | WO 02 18515 A (CLARIANT INT LTD) 7 March 2002 (2002-03-07) * claims * | 1,7-9 | |
| D,A | US 4 038 280 A (RANDELL ET AL) 26 July 1977 (1977-07-26) * claims * | 1,7-9 | |
| A | US 5 851 425 A (BUCHECKER RICHARD ET AL) 22 December 1998 (1998-12-22) * abstract * * column 1, line 1 - column 3, line 25 * | 1,3 | TECHNICAL FIELDS SEARCHED (Int.Cl.7) C09K G02F |
| D,A | EP 0 385 688 A (MATSUSHITA ELECTRIC IND CO LTD) 5 September 1990 (1990-09-05) * claims * | 1-4 | |
| D,A | US 5 122 296 A (JOHTEN ET AL) 16 June 1992 (1992-06-16) * claims * | 1,2 | |
| D,A | US 6 139 925 A (DARIUS ET AL) 31 October 2000 (2000-10-31) * column 1, line 1 - column 16, line 58; claims * | 1,2, 10-17 | |

-/--

The present search report has been drawn up for all claims

| Place of search | Date of completion of the search | Examiner |
|---|---|---|
| THE HAGUE | 27 August 2002 | Serbetsoglou, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 02 00 8099

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 445 762 A (MANERO ET AL)<br>29 August 1995 (1995-08-29)<br>* claims * | 1,4 | |
| D,A | & EP 0 599 928 A (HOECHST AG)<br>8 June 1994 (1994-06-08)<br>--- | | |
| D,A | DE 196 29 812 A (MERCK PATENT GMBH)<br>6 February 1997 (1997-02-06)<br>* page 12 - page 16; claims *<br>----- | 1 | |

TECHNICAL FIELDS SEARCHED (Int.Cl.7)

The present search report has been drawn up for all claims

| Place of search | Date of completion of the search | Examiner |
|---|---|---|
| THE HAGUE | 27 August 2002 | Serbetsoglou, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

## ANNEX TO THE EUROPEAN SEARCH REPORT ON EUROPEAN PATENT APPLICATION NO. EP 02 00 8099

This annex lists the patent family membersrelating to the patent documents cited in the above-mentioned European search report.
The members are as contained in the European Patent Office EDP file on
The European Patent Office is in no way liable for these particulars which are merely given for the purpose of information.

27-08-2002

| Patent document cited in search report | Publication date | Patent family member(s) | Publication date |
|---|---|---|---|
| US 5702639 A | 30-12-1997 | DE 3939697 A1 | 06-06-1991 |
| | | DE 4011803 A1 | 17-10-1991 |
| | | AT 118808 T | 15-03-1995 |
| | | AU 640440 B2 | 26-08-1993 |
| | | AU 6954591 A | 26-06-1991 |
| | | CA 2069936 A1 | 02-06-1991 |
| | | CN 1053633 A ,B | 07-08-1991 |
| | | DE 59008550 D1 | 30-03-1995 |
| | | WO 9108272 A1 | 13-06-1991 |
| | | EP 0502964 A1 | 16-09-1992 |
| | | ES 2071289 T3 | 16-06-1995 |
| | | FI 922407 A | 26-05-1992 |
| | | HU 60758 A2 | 28-10-1992 |
| | | IE 904328 A1 | 05-06-1991 |
| | | JP 2841306 B2 | 24-12-1998 |
| | | JP 3180815 A | 06-08-1991 |
| | | JP 2647256 B2 | 27-08-1997 |
| | | JP 4227685 A | 17-08-1992 |
| | | KR 189050 B1 | 01-06-1999 |
| | | NO 922135 A | 17-07-1992 |
| | | NZ 236274 A | 25-02-1993 |
| | | PL 288038 A1 | 15-06-1992 |
| | | PT 96055 A | 30-09-1991 |
| | | ZA 9009635 A | 24-06-1992 |
| | | RU 2092517 C1 | 10-10-1997 |
| DE 19934799 A | 01-02-2001 | DE 19934799 A1 | 01-02-2001 |
| | | JP 2001081466 A | 27-03-2001 |
| WO 0218515 A | 07-03-2002 | EP 1184442 A1 | 06-03-2002 |
| | | WO 0218515 A1 | 07-03-2002 |
| US 4038280 A | 26-07-1977 | GB 1395159 A | 21-05-1975 |
| | | AT 318925 B | 25-11-1974 |
| | | AT 317555 B | 10-09-1974 |
| | | CA 984845 A1 | 02-03-1976 |
| | | CA 986115 A1 | 23-03-1976 |
| | | CH 586251 A5 | 31-03-1977 |
| | | DE 2257998 A1 | 14-06-1973 |
| | | DE 2258086 A1 | 07-06-1973 |
| | | ES 409077 A1 | 01-05-1976 |
| | | ES 409081 A1 | 16-03-1976 |
| | | FR 2162058 A1 | 13-07-1973 |
| | | FR 2162059 A1 | 13-07-1973 |
| | | IT 971343 B | 30-04-1974 |
| | | IT 971344 B | 30-04-1974 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 02 00 8099

This annex lists the patent family membersrelating to the patent documents cited in the above-mentioned European search report.
The members are as contained in the European Patent Office EDP file on
The European Patent Office is in no way liable for these particulars which are merely given for the purpose of information.

27-08-2002

| Patent document cited in search report | Publication date | Patent family member(s) | Publication date |
|---|---|---|---|
| US 4038280 A | | JP 1066764 C | 30-09-1981 |
| | | JP 48065181 A | 08-09-1973 |
| | | JP 56009554 B | 02-03-1981 |
| | | JP 48076787 A | 16-10-1973 |
| | | NL 7216276 A | 04-06-1973 |
| | | NL 7216277 A | 04-06-1973 |
| | | US 3847930 A | 12-11-1974 |
| US 5851425 A | 22-12-1998 | CN 1168378 A | 24-12-1997 |
| | | DE 59707350 D1 | 04-07-2002 |
| | | EP 0799830 A1 | 08-10-1997 |
| | | JP 10095785 A | 14-04-1998 |
| | | SG 64421 A1 | 27-04-1999 |
| EP 0385688 A | 05-09-1990 | JP 2225592 A | 07-09-1990 |
| | | JP 2636035 B2 | 30-07-1997 |
| | | DE 69019042 D1 | 08-06-1995 |
| | | DE 69019042 T2 | 30-11-1995 |
| | | EP 0385688 A2 | 05-09-1990 |
| | | US 5403511 A | 04-04-1995 |
| US 5122296 A | 16-06-1992 | JP 2110434 A | 23-04-1990 |
| | | JP 2151683 A | 11-06-1990 |
| | | DE 68926901 D1 | 05-09-1996 |
| | | DE 68926901 T2 | 02-01-1997 |
| | | EP 0365255 A2 | 25-04-1990 |
| US 6139925 A | 31-10-2000 | DE 19903746 A1 | 05-08-1999 |
| | | GB 2334031 A | 11-08-1999 |
| | | JP 11302652 A | 02-11-1999 |
| | | US 2002084444 A1 | 04-07-2002 |
| US 5445762 A | 29-08-1995 | AU 2440092 A | 16-03-1993 |
| | | DE 59208248 D1 | 24-04-1997 |
| | | WO 9304142 A1 | 04-03-1993 |
| | | EP 0528415 A1 | 24-02-1993 |
| | | EP 0599928 A1 | 08-06-1994 |
| | | ES 2101861 T3 | 16-07-1997 |
| | | JP 6510282 T | 17-11-1994 |
| DE 19629812 A | 06-02-1997 | DE 19629812 A1 | 06-02-1997 |
| | | CN 1192230 A | 02-09-1998 |
| | | DE 59608275 D1 | 03-01-2002 |
| | | WO 9705214 A1 | 13-02-1997 |
| | | EP 0842238 A1 | 20-05-1998 |
| | | JP 11510199 T | 07-09-1999 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 02 00 8099

This annex lists the patent family members relating to the patent documents cited in the above-mentioned European search report.
The members are as contained in the European Patent Office EDP file on
The European Patent Office is in no way liable for these particulars which are merely given for the purpose of information.

27-08-2002

| Patent document cited in search report | Publication date | Patent family member(s) | Publication date |
|---|---|---|---|
| DE 19629812 A | | US 6406761 B1 | 18-06-2002 |

EPO FORM P0459

For more details about this annex : see Official Journal of the European Patent Office, No. 12/82